# EUROPÄISCHE PATENTANMELDUNG

(11) **EP 2 177 593 A1**
(43) Veröffentlichungstag der Anmeldung: **21.04.2010**
(21) Anmeldenummer: 08014604.6
(22) Anmeldetag: 18.08.2008
(51) Int. Cl.: C10L 5/00

(54) **Brennstoffsystem und Verfahren zur Herstellung eines solchen**

(71) Anmelder: Löhr, Tobias, 98000 Monte Carlo (MC)
(72) Erfinder: Löhr, Tobias, 98000 Monte Carlo (MC); Szczendzina, Georg, 45701 Herten (DE)
(74) Vertreter: Michalski, Stefan

(57) **Zusammenfassung**

Die vorliegende Erfindung betrifft ein Brennstoffsystem sowie ein Verfahren zur Herstellung eines solchen Brennstoffsystems. Das erfindungsgemäße Brennstoffsystem zeigt bei gleichen brennstofftechnischen Eigenschaften wie fossile Brennstoffe ein gegenüber diesen deutlich verminderten Gehalt an fossilen Kohlenstoff. Hierdurch wird bei dem Einsatz des erfindungsgemäßen Brennstoffsystems die Emission von auf fossilen Kohlenstoff basierendem Kohlendioxid deutlich verringert. In einer Ausgestaltung des erfindungsgemäßen Verfahrens wird das erfindungsgemäße Brennstoffsystem aus einer Mischung aus wenigstens zwei unterschiedlichen fossilen Regel-Brennstoffen und wenigstens einem biogenen Kohlenstoffspender bereitgestellt, wobei als biogener Kohlenstoffspender Biomassen dienen.

## Beschreibung

Die vorliegende Erfindung betrifft ein Brennstoffsystem sowie ein Verfahren zur Herstellung eines erfindungsgemäßen Brennstoffsystems.

Brennstoffe dienen allgemein als Energieträger bei der Erzeugung von Wärme oder Strom. Aus dem Stand der Technik ist eine Vielzahl unterschiedlicher Brennstoffe bekannt, wobei der Anteil der sogenannten fossilen Brennstoffe überwiegt.

Zu den fossilen Brennstoffen gehören beispielsweise Braunkohle, Steinkohle, Torf, Erdgas und Erdöl, welche im Laufe der Erdgeschichte als Abbauprodukt aus abgestorbenen Pflanzen und Tieren entstanden sind. Die fossilen Brennstoffe basieren auf dem Kohlenstoffkreislauf und enthalten als Hauptenergieträger Kohlenstoff. Während aktuell der weltweite Energiebedarf zu ca. 81% durch fossile Brennstoffe gedeckt wird gehen Schätzungen von einer Steigerung der Energiedeckung durch fossile Energieträger in den nächsten 25 Jahren bis auf etwa 90% aus.

Fossile Brennstoffe werden bereits seit dem 18. und 19. Jahrhundert genutzt und gelten als Grundstein der industriellen Revolution. Insbesondere jedoch in den letzten 40 Jahren ist der weltweite Energiebedarf und damit einhergehend der Verbrauch an fossilen Brennstoffen derart gestiegen, dass die Gewinnung von Energie aus fossilen Brennstoffen zu Umweltproblemen geführt hat.

Fossile Brennstoffe allgemein basieren auf organischen Kohlenstoffverbindungen, welche bei der oxidativen Umsetzung mit Sauerstoff, wie sie beispielsweise bei der Verbrennung erfolgt, Energie in Form von Wärme freisetzen. Als ein Nebenprodukt entsteht bei dieser oxidativen Umsetzung Kohlendioxid.

Da das im Rahmen der Verbrennung von fossilen Brennstoffen freigesetzte Kohlendioxid aus im Laufe von Millionen Jahren gespeicherten Kohlenstoffverbindungen stammt führt diese massive Verbrennung zu einer Anreicherung von Kohlendioxid in der Erdatmosphäre.

Kohlendioxid selbst wiederum wird vielfach als sogenanntes "Treibhausgas" bezeichnet, welches zu einer Beeinträchtigung der ökologischen Gleichgewichte auf der Erde beitragen könnte. Kohlendioxid in der Atmosphäre steht im Verdacht, wie ein Glasdach eines Treibhauses die Abstrahlung von Wärmeenergie von der Erde in das Weltall zu vermindern, wobei es gleichzeitig die Sonneneinstrahlung auf die Erde nur unwesentlich reduziert. Dieser Effekt steht im Verdacht, zu einer globalen Erwärmung führen zu können.

Zur Kontrolle der Emission von CO₂ in die Atmosphäre hat die Europäische Union unter Berücksichtigung des sogenannten Kyoto-Protokolls Klimaschutzziele festgelegt, in welchem Zusammenhang auch sogenannte Emissionszertifikate eingeführt wurden. Seit 2005 sind die EU-Mitgliedsländer durch die EU-Emissionshandels-Richtlinie verpflichtet, jeweils zu Beginn einer Emissionshandelsperiode einen nationalen Allokationsplan vorzulegen. Darin wird festgeschrieben, wie viele Treibhausgase jeder größere Emittent eines Landes in einem bestimmten Zeitraum ausstoßen darf. Gemäß Artikel 9 der Richtlinie muss dieser Zuteilungsplan von der EU-Kommission auf Basis von 12 Kriterien geprüft und genehmigt werden. Dies betrifft vor allem die Vereinbarkeit mit den vom Land selbst gesteckten Zielen im Rahmen des Kyoto-Protokolls, die Gleichbehandlung von Unternehmen und die Einhaltung des EU-Wettbewerbsrechts. Emittiert ein Unternehmen mehr als die ihm zugeteilten Emissionsmengen, muss es bei einer anderen Firma Emissionsrechte zukaufen. Dies kann beispielsweise an einer Energiebörse wie der EXAA erfolgen. Emittiert ein Unternehmen wiederum weniger als die ihm zugeteilten Emissionsrechte, kann es die überschüssige Emissionsmenge an andere Unternehmen veräußern. Um den CO₂-Anteil in der Atmosphäre tatsächlich zu senken, werden die erlaubten Emissionen jedoch Schritt für Schritt gesenkt werden.

Hauptemittenten für CO₂ sind die Industrie- und Wirtschaftszweige, welche einen hohen Energiebedarf haben. Dies sind beispielsweise Kraftwerke, Erdölraffinerien, Kokereien, Eisen- und Stahlwerke, die Zementindustrie, die Glasindustrie, die Kalkindustrie, die Ziegelindustrie, die Dämmstoffindustrie, die Keramikindustrie, sowie die Zellstoff- und Papierindustrie.

Ein Weg der Vermeidung der CO₂ Akkumulation in der Atmosphäre ist die Verwendung sogenannter regenerativer Energie. Hierunter werden im Allgemeinen Windkraft, Wasserkraft, Solarenergie, sowie die Verwendung von Biomassen sowohl als Brennstoff wie auch zur Herstellung von Biogas verstanden. Im Falle der Verwendung von Biomassen als Energieträger besteht jedoch das Problem, dass diese einen im Vergleich zu fossilen Brennstoffen deutlich geringeren Energiegehalt aufweisen. Andererseits besitzen Biomassen den Vorteil, dass sie als Energieträger dem aktuellen Kohlenstoffkreislauf entnommen werden. Dies bedeutet, dass das durch die oxidative Umsetzung von Biomassen freigesetzte Kohlendioxid in erdgeschichtlichen Maßstäben erst vor kurzer Zeit gebildet wurde und bei gleichzeitiger Wiederanpflanzung der Biomassen auch durch die nachwachsenden Pflanzen direkt wieder dem Kohlenstoffkreislauf entzogen wird. Hierdurch wird eine ausgeglichene Kohlendioxidbilanz erreicht und die Akkumulation von Kohlendioxid in der Atmosphäre vermieden.

Für die großindustrielle Nutzung sind die bisher aus dem Stand der Technik bekannten auf Biomassen basierenden Brennstoffe jedoch aufgrund ihres deutlich geringeren Energiegehaltes vielfach nicht effizient genug einsetzbar. Darüber hinaus müssen für die Verwendung von Biomassen als Brennstoff vielfach andere Feuerungstechniken vorgesehen werden, als sie für die Verbrennung von fossilen Brennstoffen wie beispielsweise Steinkohle oder Braunkohle eingesetzt werden. Dies bedeutet, dass einerseits zur Freisetzung einer bestimmten Energiemenge eine deutlich größere Menge an Biomassen als an fossilen Brennstoffen verbrannt werden müsste, zum anderen dass zur Nutzung von Biomassen als Brennstoff im industriellen Maßstab die vorhandenen Feuerungssysteme vielfach aufwändig umgerüstet werden müssten.

Neben dem Energiegehalt unterscheiden sich die als Brennstoff eingesetzten Biomassen auch noch hinsichtlich ihrer weiteren Eigenschaften wie Aschegehalt, flüchtige Bestandteile, Wasserstoffgehalt und Wassergehalt von den fossilen Brennstoffen. All diese Faktoren spielen jedoch bei der industriellen Nutzung von Brennstoffen in Abhängigkeit der jeweiligen Anwendungen eine bedeutende Rolle, so dass der Austausch von fossilen Brennstoffen gegen Biomassen als Brennstoff im Bereich der industriellen Anwendungen vielfach nicht möglich ist.

Das zuvor Ausgeführte berücksichtigend ist es daher die **Aufgabe** der folgenden Erfindung, ein Brennstoff anzugeben, welcher einerseits ökologisch vorteilhafter ist, andererseits für die industrielle Anwendung uneingeschränkt nutzbar ist. Darüber hinaus ist es Aufgabe der vorliegenden Erfindung, ein Verfahren zur Herstellung eines solchen Brennstoffs anzugeben.

**Gelöst** wird diese Aufgabe hinsichtlich des Brennstoffs durch ein Brennstoffsystem, welches dadurch gekennzeichnet ist, dass dieses bei gleichen brennstofftechnischen Eigenschaften wie fossile Brennstoffe einen gegenüber diesen verminderten Gehalt an fossilem Kohlenstoff aufweist.

Das erfindungsgemäße Brennstoffsystem besteht vorteilhafter Weise aus einer Mischung aus wenigstens zwei unterschiedlichen fossilen Regel-Brennstoffen und wenigstens einem biogenen Kohlenstoffspender.

Unter biogenen Kohlenstoffspender im Sinne der Erfindung sind allgemein Biomassen zu verstehen. Insbesondere geeignet als biogene Kohlenstoffspender sind nachwachsenden Rohstoffe wie Holz, Naturfaser, Pflanzenöle, Zucker, Stärke, getrocknete Vegetabilien und Cerealien.

In dem erfindungsgemäßen Brennstoffsystem werden vorteilhaft als fossile Regel-Brennstoffe Braunkohle, Steinkohle und/oder Anthrazit eingesetzt.

Durch das erfindungsgemäße Brennstoffsystem wird ein Brennstoff zur Verfügung gestellt, welcher hinsichtlich seinen brennstofftechnischen Eigenschaften die Anforderungen an fossile Brennstoffe erfüllt, gleichzeitig jedoch auf den freisetzbaren Energiegehalt gerechnet eine deutlich geringere Emission an CO₂ aus fossilen Kohlenstoffträgern zeigt.

Der Anteil an biogenen Kohlenstoffträgern beträgt in dem erfindungsgemäßen Brennstoffsystem wenigstens 20 Gew.-% bezogen auf die Gesamtmasse.

Das Brennstoffsystem zeigt hierdurch einen gegenüber fossilen Brennstoffen bezogen auf den Heizwert um wenigstens 11 % verminderten effektiven Gehalt an fossilen Kohlenstoff, wobei zur Berechnung des effektiven Gehaltes an fossilem Kohlenstoff der prozentuale Anteil an fossilem Kohlenstoff in das Verhältnis zum Heizwert gesetzt wird.

In einer weiteren Ausgestaltung des erfindungsgemäßen Brennstoffsystems weist dieses neben den fossilen Brennstoff und den biogenen Kohlenstoffspender ein Veredelungsprodukt aus der Gruppe bestehend aus Steinkohlenkoks, Petrolkoks, Braunkohlenkoks und Holzkohle auf.

Hinsichtlich des Verfahrens wird die Aufgabe der vorliegenden Erfindung durch ein Verfahren zur Herstellung eines Brennstoffsystems der vorbeschriebenen Art gelöst, welches die Verfahrensschritte:
1. Auswahl eines ersten fossilen Regel-Brennstoffes mit einem niedrigen Gehalt an flüchtigen Bestandteilen, eines zweiten fossilen Regel-Brennstoffes mit einem mittleren Gehalt an flüchtigen Bestandteilen und eines biogenen Kohlenstoffträgers;
2. Mischen des ersten fossilen Regel-Brennstoffes mit dem zweiten fossilen Regel-Brennstoff;
3. Mischen des in Schritt 2 erhaltenen Gemisches mit dem biogenen Kohlenstoffträger;
aufweist, wobei die fossilen Regel-Brennstoffe und der biogene Kohlenstoffträger mit der Maßgabe ausgewählt werden, dass das erhaltene Brennstoffsystem wenigstens hinsichtlich seiner Eigenschaften Aschegehalt, flüchtige Bestandteile und Heizwert den an einem Regel-Brennstoff gestellten Anforderungen entspricht.

Verfahrensgemäß kann es vorgesehen sein, dass in Schritt 3 dem in Schritt 2 erhaltenen Gemisch aus fossilen Regel-Brennstoffen wenigstens 20 Gew.-% bezogen auf die Gesamtmasse an biogenen Kohlenstoffträger zugemischt werden.

Vorteilhafterweise weist der erste ausgewählte Regel-Brennstoff einen flüchtigen Anteil wasser- und aschefrei (waf) ≤ 10 Gew.-% auf. Geeignete Regel-Brennstoffe dieser Art sind beispielsweise Anthrazit und/oder Magerkohle.

Der zweite ausgewählte Regel-Brennstoff weist vorteilhafterweise einen flüchtigen Anteil wasser- und aschefrei zwischen > 10 Gew.-% und ≤ 40 Gew.-% auf. Geeignete Regel-Brennstoffe dieser Art sind beispielsweise Esskohle, Fettkohle, Gaskohle, Gasflammkohle, Flammkohle, vorgetrocknete Glanzbraunkohle oder vorgetrocknete Mattbraunkohle.

Als biogene Kohlenstoffträger werden erfindungsgemäß in Schritt 3 vorteilhafterweise feste Biomassen wie beispielsweise Holz, Holzpellets, Holzhackschnitzel, Naturfasern, Cerealien, Zucker oder getrocknete Vegetabilien zugemischt.

In einer weiteren Ausgestaltung des erfindungsgemäßen Verfahrens kann es vorgesehen sein, dass die festen Biomassen vor einer Zumischung zu dem in Schritt 2 erhaltenen Gemisch aus fossilen Regel-Brennstoffen mit einem im Wesentlichen flüssigen biogenen Kohlenstoffträger wie beispielsweise Pflanzenölen, Pflanzenfett und/oder Alkohol getränkt werden. Alternativ kann es vorgesehen sein, dass zu der nach Verfahrensschritt 3 erhaltenen Mischung aus Regel-Brennstoffen und biogenen Kohlenstoffträger ein im Wesentlichen flüssiger biogener Kohlenstoffträger zugemischt wird.

Zur Vermeidung von Verklumpungen oder Verklebungen beim Transport oder der Förderung des Brennstoffsystems kann es in einer Ausgestaltung der Erfindung vorgesehen sein, das verfahrensgemäß erhaltene Brennstoffsystem abschließend mit einem Staub oder pulverförmigen Zuschlagstoff zu mischen. Als solche Zuschlagstoffe können beispielsweise Sägemehl, Hülsenfruchtschrot oder Kohlestaub vorgesehen sein. Durch die Zugabe eines solchen Zuschlagstoffes wird das Verklumpen oder Verkleben des Brennstoffsystems insbesondere bei der Zugabe von im Wesentlichen flüssigen biogenen Kohlenstoffträgern vermieden und das erhaltene Brennstoffsystem bleibt weiterhin uneingeschränkt mit den im Stand der Technik üblichen Mitteln transport- und förderfähig.

Das mit dem erfindungsgemäßen Verfahren gewonnene erfindungsgemäße Brennstoffsystem ist insbesondere zur Kraftwerksfeuerung bei der Strom- und/oder Wärmeerzeugung, zur Papierherstellung, zur Herstellung von Glas- oder Mineralschmelzen, sowie als Hausbrand geeignet.

Das erfindungsgemäße Brennstoffsystem sowie dessen Verfahren zur Herstellung werden nachfolgend anhand von Beispielen dargestellt, ohne dass sich die Erfindung jedoch auf diese Beispiele beschränken lässt.

In der nachfolgenden Tabelle 1 sind beispielhaft die wesentlichen Eigenschaften unterschiedlicher fossiler Brennstoffe sowie biogener Kohlenstoffträger angegeben.

| **Parameter (i. roh)** | **Anthrazitkohle** | **Fettkohle** | **Holzpellets** |
|---|---|---|---|
| Wasser in Gew.-% | 4,00 | 9,01 | 8,00 |
| Asche in Gew.-% | 8,50 | 20,50 | 0,46 |
| Flüchtige-Best.in Gew.-% | 5,20 | 21,26 | 78,20 |
| Schwefel in Gew.-% | 1,60 | 0,93 | 0,06 |
| Wasserstoff in Gew.-% | 2,50 | 3,05 | 5,87 |
| Kohlenstoff in Gew.-% | 80,25 | 57,85 | 46,00 |
| Brennwert Ho J/g | 30675 | 22705 | 18216 |
| Heizwert Hu J/g | 30027 | 21833 | 16745 |
| Heizwert Hu cal/g | 7172 | 5215 | 3999 |

### Beispiel 1

33 Gew.-% einer niedrigflüchtigen Anthrazitkohle wurden mit 33 Gew.-% einer mittelflüchtigen Fettkohle in einem Trommelmischer gemischt, bis eine homogene Durchmischung erreicht wurde. Zu dem erhaltenen Gemisch wurden 33 % Holzpellets in den Trommelmischer zugegeben und es wurde bis zur Erreichung einer im Wesentlichen homogenen Mischung weitergemischt. In der analytischen Untersuchung zeigte die erhaltene Mischung einen Wassergehalt von 7,00 Gew.-%, einen Aschegehalt von 9,8 Gew.-%, einen Anteil von flüchtigen Bestandteilen (waf) von 34,89 Gew.-%, einen Schwefelgehalt von 0,86 Gew.-% sowie einen Gesamtkohlenstoffgehalt von 61,37 Gew.-%. Von dem Gesamtkohlenstoffgehalt von 61,37 Gew.-% entfielen 46,03 Gew.-% auf fossilen Kohlenstoff und 15,33 Gew.-% auf biogenen Kohlenstoff. Das erhaltene Gemisch zeigte einen Brennwert H_{O} von 23865 J/g und einen Heizwert Hu von 5462 cal/g.

Die erhaltene Mischung zeigte ein hervorragendes Abbrandverhalten und konnte ohne anlagentechnische Veränderungen in einer bisher mit fossilen Brennstoffen betriebenen Rostfeuerung verbrannt werden.

Bezogen auf den Energiegehalt von Anthrazitkohle enthielt die Mischung einen um 20,11 % geringeren Anteil an fossilen Kohlenstoff. Gegenüber dem Energiegehalt einer mittelflüchtigen Fettkohle zeigte die Mischung einen um 13,94 % geringeren Gehalt an fossilen Kohlenstoff.

### Beispiel 2

In der in Beispiel 1 beschriebenen Art und Weise wurden 40 Gew.-% einer niedrigflüchtigen Anthrazitkohle mit 30 Gew.-% einer mittelflüchtigen Fettkohle und 30 Gew.-% Holzpellets als biogenen Kohlenstoffträger gemischt. Die erhaltene Mischung zeigte einen Wassergehalt von 6,70 Gew.-%, einen Aschegehalt von 9,69 Gew.-%, einen Anteil an flüchtigen Bestandteilen (waf) von 31,92 Gew.-%, einen Schwefelgehalt von 0,94 Gew.-%, sowie einen Wasserstoffgehalt von 3,68 Gew.-%. Der Gesamtkohlenstoffanteil in der Mischung betrug 63,26 Gew.-%, wovon 49,46 Gew.-% auf fossilen Kohlenstoff und 13,80 Gew.-% auf biogenen Kohlenstoff entfielen. Die Mischung erreichte einen Brennwert H_{O} von 24546 J/g und einen Heizwert von Hu von 5633 cal/g. Bezogen auf den Heizwert von Anthrazitkohle zeigte die Mischung einen um 17,28 % verringerten Anteil an fossilem Kohlenstoff und bezogen auf eine mittelflüchtige Fettkohle einen um 12,06 % verringerten Anteil an fossilem Kohlenstoff.

### Beispiel 3:

In der in den Beispielen 1 und 2 beschriebenen Weise wurden 60 Gew.-% einer niedrigflüchtigen Kohle mit 10 Gew.-% einer mittelflüchtigen Kohle und 30 Gew.-% eines biogenen Kohlenstoffträgers gemischt. Die erhaltene Mischung zeigte ein Wassergehalt von 5,70 Gew.-%, einen Aschegehalt von 7,29 Gew.-%, ein Gehalt an flüchtigen Bestandteilen (waf) von 28,71 Gew.-%, ein Schwefelgehalt von 1,07 Gew.-%, sowie einen Wasserstoffgehalt von 3,57 Gew.-%. Der Gesamtkohlenstoffanteil lag bei 67,74 Gew.-%, wovon 53,94 Gew.-% auf fossilen Kohlenstoff und 13,80 Gew.-% auf biogenen Kohlenstoff entfielen. Die Mischung erreichte einen Brennwert H_{O} von 26140 J/g und einen Heizwert Hu von 6024 cal/g. Die erhaltene Mischung zeigte einen gegenüber der niedrigflüchtigen Kohle um 16,06 % verringerten Gehalt an fossilen Kohlenstoff und gegenüber der mittelflüchtigen Kohle einen um 11,18 % verringerten Gehalt an fossilem Kohlenstoff.

## Patentansprüche

1. Brennstoffsystem, **dadurch gekennzeichnet, dass** dieses bei gleichen brennstofftechnischen Eigenschaften wie fossile Brennstoffe einen gegenüber diesen verminderten Gehalt an fossilem Kohlenstoff aufweist.

2. Brennstoffsystem gemäß Anspruch 1, wobei dieses aus einer Mischung aus wenigstens zwei unterschiedlichen fossilen Regel-Brennstoffen und wenigstens einem biogenen Kohlenstoffspender besteht.

3. Brennstoffsystem gemäß Anspruch 2, wobei dieses als fossilen Regel-Brennstoff Braunkohle, Steinkohle und/oder Anthrazit aufweist.

4. Brennstoffsystem gemäß einem der Ansprüche 2 oder 3, wobei dieses als biogenen Kohlenstoffspender Biomasse aufweist.

5. Brennstoffsystem gemäß einem der Ansprüche 2 bis 4, wobei dieses als biogenen Kohlenstoffspender wenigstens einen nachwachsenden Rohstoff aus der Gruppe bestehend aus Holz, Naturfaser, Pflanzenöle, Alkohol, Zucker, Stärke, getrocknete Vegetabilien und Cerealien aufweist.

6. Brennstoffsystem gemäß einem der Ansprüche 2 bis 5, wobei dieses ein Veredelungsprodukt aus der Gruppe bestehend aus Steinkohlenkoks, Petrolkoks, Braunkohlenkoks und Holzkohle aufweist.

7. Brennstoffsystem gemäß einem der vorhergehenden Ansprüche, wobei dieses einen Anteil an biogenen Kohlenstoffträgern von wenigstens 20 Gew.-% bezogen auf die Gesamtmasse aufweist.

8. Brennstoffsystem gemäß einem der vorhergehenden Ansprüche, wobei dieses einen gegenüber fossilen Brennstoffen bezogen auf den Heizwert um wenigstens 11 % verminderten effektiven Gehalt an fossilem Kohlenstoff aufweist, wobei zur Berechnung des effektiven Gehaltes an fossilem Kohlenstoff der prozentuale Anteil an fossilem Kohlenstoff in das Verhältnis zum Heizwert gesetzt wird.

9. Verfahren zur Herstellung eines Brennstoffsystems gemäß einem der Ansprüche 1 bis 8, aufweisend die Verfahrensschritte:
1) Auswahl eines ersten fossilen Regel-Brennstoffes mit einem niedrigen Gehalt an flüchtigen Bestandteilen, eines zweiten fossilen Regel-Brennstoffes mit einem mittleren Gehalt an flüchtigen Bestandteilen, und eines biogenen Kohlenstoffträgers;
2) Mischen des ersten fossilen Regel-Brennstoffes mit dem zweiten fossilen Regel-Brennstoff;
3) Mischen des in Schritt 2 erhaltenen Gemisches mit dem biogenen Kohlenstoffträger;
wobei die fossilen Regel-Brennstoffe und der biogene Kohlenstoffträger mit der Maßgabe ausgewählt werden, dass das erhaltene Brennstoffsystem wenigstens hinsichtlich seiner Eigenschaften Aschegehalt, flüchtige Bestandteile und Heizwert den an einen Regel-Brennstoff gestellten Anforderungen entspricht.

10. Verfahren gemäß Anspruch 9, wobei in Schritt 3 wenigstens 20 Gew.-% bezogen auf die Gesamtmasse an biogenem Kohlenstoffträger zugemischt werden.

11. Verfahren gemäß einem der Ansprüche 9 und 10, wobei der erste Regel-Brennstoff einen flüchtigen Anteil wasser- und aschefrei (waf) ≤ 10 Gew.-% aufweist.

12. Verfahren gemäß Anspruch 11, wobei der erste Regel-Brennstoff ausgewählt ist aus der Gruppe bestehend aus Anthrazit und Magerkohle.

13. Verfahren gemäß einem der Ansprüche 9 bis 11, wobei der zweite Regel-Brennstoff einen flüchtigen Anteil wasser- und aschefrei (waf) zwischen > 10 Gew.-% und ≤ 40 Gew.-% aufweist.

14. Verfahren gemäß Anspruch 13, wobei der zweite Regel-Brennstoff ausgewählt ist aus der Gruppe bestehend aus Esskohle, Fettkohle, Gaskohle, Gasflammkohle, Flammkohle, vorgetrockneter Glanzbraunkohle und vorgetrockneter Mattbraunkohle.

15. Verfahren gemäß einem der Ansprüche 9 bis 14, wobei als biogener Kohlenstoffträger eine im Wesentlichen feste Biomasse, vorzugsweise Holz, Holzpellets, Holzhackschnitzel, Naturfasern, Cerealien, Zucker oder getrocknete Vegetabilien, zugemischt wird.

16. Verfahren gemäß Anspruch 15, wobei die im Wesentlichen feste Biomasse vor der Zumischung mit einem im Wesentlichen flüssigen biogenen Kohlenstoffträger, vorzugsweise Pflanzenöl, Pflanzenfett und/oder Alkohol, getränkt wird.

17. Verfahren gemäß einem der Ansprüche 9 bis 16, wobei der im Schritt 2 erhaltenen Mischung vor der Zumischung des biogenen Kohlenstoffträgers ein Veredelungsprodukt aus der Gruppe bestehend aus Steinkohlenkoks, Petrolkoks, Braunkohlenkoks und Holzkohle zugemischt wird.

18. Verfahren gemäß einem der Ansprüche 9 bis 17, wobei der in Schritt 2 und/oder in Schritt 3 erhaltenen Mischung ein im Wesentlichen staub- oder pulverförmiges Substrat, vorzugsweise Sägespäne, Hülsenfruchtschrot und/oder Kohlestaub, zugemischt wird.

19. Verwendung des nach einem Verfahren gemäß einem der Ansprüche 9 bis 18 hergestellten Brennstoffsystems zur Kraftwerksfeuerung bei der Strom- und/oder Wärmeerzeugung, zur Papierherstellung, zur Herstellung von Glas- oder Mineralschmelzen, sowie im Hausbrand.
